Europäisches Patentamt

European Patent Office

Office européen des brevets

(19)

(11) EP 1 392 087 A1

(12) EUROPEAN PATENT APPLICATION
published in accordance with Art. 158(3) EPC

(43) Date of publication:
25.02.2004   Bulletin 2004/09

(51) Int Cl.7: H05H 1/30, B01J 19/12,
C01B 3/36

(21) Application number: 01925587.6

(22) Date of filing: 27.04.2001

(86) International application number:
PCT/ES2001/000161

(87) International publication number:
WO 2002/089536 (07.11.2002 Gazette 2002/45)

(84) Designated Contracting States:
AT BE CH CY DE DK ES FI FR GB GR IE IT LI LU
MC NL PT SE TR
Designated Extension States:
AL LT LV MK RO SI

(71) Applicant: David Systems & Technology S.L.
28010 Madrid (ES)

(72) Inventors:
• BLACH VIZOSO, Ricardo
E-28001 Madrid (ES)
• POTAPKIN, Boris-Vasilievich
Moscu, 123308 (RU)
• ZHIVOTOV, Viktor-Konstantinovi
Moscu, 123154 (RU)

• RUSANOV, Vladimir-Dmitrievich
Moscu, 123060 (RU)
• BABARISTKY, Aleksandr-Ivanovich
Moscu, 103460 (RU)
• DEMINSKY, Marsim-Aleksandrovic
Moscu, 105264 (RU)
• KROTOV, Michail-Fedorovich
Moscu, 123181 (RU)
• FATEEV, Vladimir Nikolaeevic
Moscu, 127322 (RU)

(74) Representative: Carpintero Lopez, Francisco
HERRERO & ASOCIADOS, S.L.
Alcalá, 35
28014 Madrid (ES)

(54) METHOD FOR PLASMA-CATALYTIC CONVERSION OF FUELS THAT CAN BE USED IN AN INTERNAL COMBUSTION ENGINE OR A GAS TURBINE INTO A SYNTHETIC GAS AND THE PLASMA-CATALYTIC CONVERTER USED FOR SAME

(57)    The invention relates to the method and device for plasmacatalytic conversion of liquid hydrocarbons, such as engine fuels, into a synthesis gas by employing a pulse-periodic pseudocorona streamer microwave discharge (or semi-continuous microwave discharge) in the presence of air, and in certain cases, water.

The method for plasmacatalytic conversion of EF into synthesis gas can comprise the conversion processes steam-air-fuel and air-fuel into the synthesis gas. The device comprises the heater (14), the combustion chamber (1), the microwave plasmacatalytic reactor - resonator (3) connected in succession (fig 1) and the superhigh frequency generator (12). The reactor uses the pulse periodic pseudocorona streamer discharge of superhigh frequency, that ensures the plasmacatalytic process for conversion of engine fuels at low temperatures; most of the thermodynamic energy required is obtained by a prior heating of the reagents, with part of the heat being recuperated at the synthesis gas outlet of the reactor.

FIG. 1

EP 1 392 087 A1

**Description**

**Technical field of application**

The invention relates to devices for conversion of liquid hydrocarbons, for example, or other fuels that may be used in internal combustion engines or gas turbines, into a synthesis gas mainly containing hydrogen and CO, using a superhigh frequency (SHF) plasma, in the presence of air or oxygen and in certain cases water.

The invention can be used in the petrochemical industry, the chemical industry, mobile devices (transportation means equipped with internal combustion engines, fuel cells or gas turbines), as well as in stationary systems (power generation with electric generators, fuel cells or gas turbines) for large-scale manufacture of synthesis gas that can be used as a fuel for the aforementioned equipment. Use of a plasma converter on-board a transportation means in combination with an internal combustion engine adapted to use the mixture of synthesis gas allows to reduce emission of pollutants by said engine when employing petroleum-derived fuels, while at the same time increasing the efficiency of the engine (between 10 and 15%) and considerably enhancing engine performance without a radical change in its construction, etc.

**Background of the invention**

1.- A device is known for conversion of hydrocarbons comprising a reactor in which a microwave discharge takes place, initiating the conversion process, and a catalytic block placed after the reactor in the reagent feed line, that accelerates the reaction of the process - US Patent US No. 5015 349, C109 15/00, published on 21.12.89.
    In this scheme the role of the discharge is limited to providing the system with a certain additional energy in the form of a characteristic energy of the plasma component, which stimulates the chemical process in the chemical reactor or directly in the traditional catalyser.

2.- The method and device are known for treating chemical plasma, for the previously heated reagents (including the hydrocarbons) by microwave pulse discharge. The device contains the prior combustion chamber for the reagents, at the inlet of which arrive part of the reagents, the reagent mixing chamber, the pulse microwave generator with certain radiation time characteristics, and the discharge chamber, which in itself represents a short-circuit waveguide with a certain length, inside which the pulse microwave discharge acts on the reagents - patent WO 9828223, CO1B 3/34, published on 02.07.98.

The known device has insufficient energy efficiency for the plasma process. The device is a chemical plasma reactor, in the construction of which the microwave radiation with given time parameters (pulse length of 2-4 microseconds and efficiency of discharge passage on the order of 10) forms a discharge spark with a rather high temperature. The ration of the discharge power to the prior heating power is quite high. The discharge chamber is a waveguide with a short-circuit system, in which regulation of the electrical field in large parameters is difficult.

**Description of the invention**

The technical parameters of the invention are the acceleration of the conversion process for liquid hydrocarbons, such as engine fuels, in the presence of air or oxygen and in certain cases water, into a synthesis gas (steam-air or air conversion) and an increased energy efficiency of the process by using the device of the invention, in which plasma formation - by pulse periodic, semi-continuous, pseudo-corona (streamer) microwave discharge - acts as a catalyst for the plasmacatalytic conversion process for engine fuels.

The technical results of the invention arise because in the plasma catalytic conversion process of the engine fuels (EF) the conversion reaction occurs for the steam-hydrocarbons-air that are part of the EF composition. The air is preheated, part of the EF is burned in the combustion chamber and the rest is mixed with the combustion products and with steam, or only with the combustion products, these reagents are sent to the plasmacatalytic reactor, where they receive the pulse microwave discharge, initiating the pseudocorona streamer pulse discharge microwave with certain time and energy parameters, so that as a result the formation of the plasma acts as a catalyst, accelerating the EF conversion process. The plasmacatalytic conversion process using the pseudocorona streamer pulse discharge microwave takes place at atmospheric pressure. Installed in the plasmacatalytic reactor is the sub-disruptive intensity level of the pulse microwaves electric field, with the streamer type pseudo corona microwave discharge initiating at the tips of the corona elements. At said tips and at the streamer heads the intensity of the microwave electric field is above 10 Kv/cm, forming the microwave streamers, which in less than 1 microsecond propagate as far as the reactor wall, while branching out in space and filling the plasmacatalytic reactor section. The sequence of impulses of the microwave radiation is in the one-centimetre or decimetre band of the super-high frequency radiation (SHF) (X, S bands) with the following parameters: duration of 0.1-1 microseconds; efficiency of the discharge passage 100-1000; the pulse power level is determined so that it corresponds to the intensity of the microwave electric field in the plasmacatalytic reactor and at the heads of the,microwave streamers, above 100 kv/cm, and the consumption of the sum of reagents Q and the average value of the microwave power W are chosen under the condition that it encompasses the band of values for the specific plasma energy contribution, W/Q, equivalent to 0.05-0.2 kW hour/nm$^3$, and the value for the plasma energy contribution is not greater than 5-10% of the energy content of the reagents at the working temperature for the process. For the steam-air plasmacatalytic conversion of EF the temperatures of the reagents at the inlet of the plasmacatalytic reactor are in the bracket 800-1500 k.

The ratio of the EF burned in the combustion chamber and the unburned fuel ranges from 0.5 to 2.

The molar ratio (molecule/gram) of $H_2O$ (air and $H_2O$), EF at the inlet of the plasmacatalytic reactor lie in the brackets 0.06-2.5 and 1-6 respectively. For the plasmacatalytic conversion in air of EF the temperatures of the reagents at the plasmacatalytic reactor inlet are in the bracket 600-1100K. The ratio of burned to unburned EF is between 0.4 and 2. The molar ratio air/EF at the inlet of the plasmacatalytic reactor is 16-20. The plasmacatalytic converter of EF into synthesis gas comprises an air heater, a combustion chamber, and a plasmatron connected to the pulse (or semi-continuous) microwave radiation source.

The plasmatron is designed as a plasmacatalytic chemical reactor comprising a cylindrical microwave generator with wavetype $H_{11}$ with a pulse periodic (or semi-continuous) pseudocorona streamer discharge of microwaves in the centimetre or decimetre wavelength bands (bands X, S) working at atmospheric pressure with impulses of duration 0.1-1 microsecond and a discharge passage efficiency of 100-10.

The combustion chamber is placed between the air heater and the plasmacatalytic reactor-resonator, along the gas flow line, and is fed by two separate nozzles for independent introduction of the burned EF and the remainder, forming a mixture with the steam in the various areas of the combustion chamber.

The system for introducing the microwave radiation from the generator to the microwave resonator is a rectangular waveguide that passes through the side wall of the resonator. The inlet system for the microwave radiation from the generator to the microwave resonator is a rectangular waveguide along the axis of the resonator. Located between the waveguide and the cylindrical resonator is the $H_{11}$ wavetype excitation system in the resonator with the communication element of the resonator to the waveguide.

The nozzle for introducing the reagents is in turn one of the end reflectors of the microwave resonator, and the outlet system for the process products is in turn the second end reflector. The reagent inlet nozzle or the outlet system for the process products is in turn one of the end reflectors of the microwave resonator, and the $H_{11}$ wavetype excitation node in the cylindrical resonator is the second end reflector.

The longitudinal axis of the waveguide is placed at a distance of several half-wavelengths in the cylindrical waveguide with the $H_{11}$ wavetype from one of the end reflectors. The resonator diameter is calculated considering that the excitation in it of the $H_{11}$ wavetype and the resonator length is an integer number of half-wavelengths in the cylindrical waveguide with the $H_{11}$ wavetype. The coefficient of communication of the resonator with the waveguide through the communication element is determined under the condition that it ensures a sub-disruptive intensity of the microwave electric field for a given diameter of the plasma-catalytic reactor-resonator. The set of sharp metal rods that initiate the plasmacatalytic discharge is installed in the areas of maximum intensity of the electric field in the microwave resonator. The location of the tip of each rod in the radius of the cylindrical resonator is chosen under the condition that at the tip of each rod and at the head of the microwave streamers a microwave electric field intensity is obtained greater than 100 kv/cm. The combustion chamber has the form of two concentric ultrasonic nozzles placed along the gas flow line and independently connected to the inlet nozzles with a recovery thermoswitch.

## Brief description of the accompanying sketches

The invention is explained by the accompanying drawings, where figure 1 shows the constructive design of the plasmacatalytic converter of EF into synthesis gas, figure 2 describes the execution scheme for the plasmacatalytic converter operating in the steam-air conversion regime, figure 3 shows the execution scheme for the plasmacatalytic converter operating in the air conversion regime, figure 4 describes the location of the sharp metal rod in the microwave resonator, and figure 5 shows the characteristic structure of the plasmacatalytic pseudocorona streamer pulse discharge microwave.

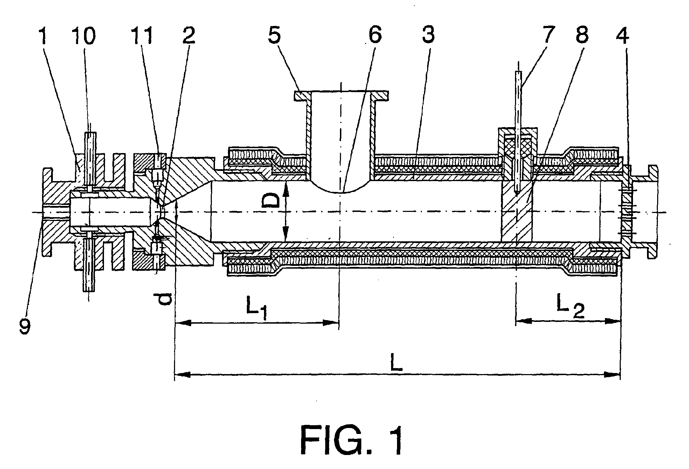

The plasma converter (see fig 1) comprises the combustion chamber (1), connected through the nozzle (2) for inlet of reagents into the reactor with the plasmacatalytic reactor, made in the form of a cylindrical resonator with a superhigh frequency (3) limited on the side of reagent inlet with the nozzle (2) and on the opposite side with the outlet system (4) for the process products, that is in the form of an end cap with orifices (see fig 1), or in the form of a nozzle with its narrowing along the motion of the gas, with the superhigh frequency power input system (5) and the excitation system for the cylindrical resonator (3) with the communication element (6).

The discharge begins by the corona element system, introduced in a waveguide, with sharp rods (7) made of a metal with a high melting point, around which forms the streamer pseudocorona microwave discharge, forming the active zone (8) of the plasmacatalytic reactor.

The combustion chamber is provided with the end nozzle (9) and two lateral nozzles (10) and (11) placed successively along the reagent flow. The combustion chamber (1) is made in the form of two concentric ultrasonic nozzle systems installed successively along the gas flow line and connected separately with the nozzles (10) and (11) for reagent inlet.

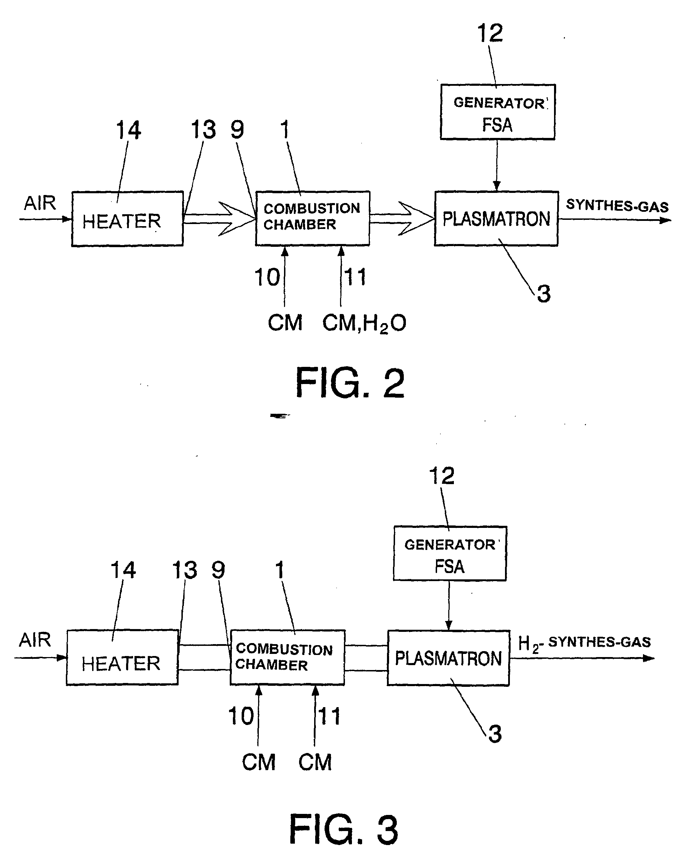

The superhigh frequency inlet node (5) with the communication orifice (6) is connected to the superhigh frequency generator (12) (see Figs. 2 and 3), and the end nozzle (9) of the combustion chamber ( 1) is connected to the outlet nozzle (13) of the heater (14).

## Detailed description and advantages of the invention

The essence of the invention is the compatibility of the area of electrical discharge and the area of the chemical catalysis process, resulting in the plasma formation acting as a catalyst while being able to form a particular type of microwave discharge with the aforementioned specific time and electrodynamics characteristics.

The plasmacatalytic process for conversion of EF into synthesis gas takes place in the pseudocorona streamer pulse-periodic (or semi-continuous) discharge of microwaves at atmospheric pressure.

The necessary condition for obtaining the discharge is the short superhigh frequency pulse duration that excites the discharge (0.1-1 microseconds), the high efficiency of the discharge passage (100-1000), a subdisruptive adjusted electrical field in the microwave resonator, an electric field above 100 kv/cm at the tip of the corona elements and at the heads that propagate in space between the branching microwave streamers. Such combination of parameters enables the discharge process as described above, as was shown by experiments conducted with such a construction of plasmacatalytic properties for carrying out conversion processes of liquid fuels into synthesis gas.

The pulse-periodic pseudocorona streamer microwave discharge at atmospheric pressure is characterised by a low reagent temperature, a high electric field at the streamer heads, and as a result a high average energy of the plasma electrons, a high unbalanced weight, a high concentration of active particles in the plasma, negative ions, clasterel radicals and as a result a high energy efficiency in the creation of the chemically active particles in the plasma; a highly efficient use of the electrical energy. In such a discharge and in the chosen regime (pulse length, efficiency of the discharge weight, communication coefficient of the resonator with the waveguide through the communication orifice, magnitude of the subdisruptive electric field in the resonator, large enough value of the electric field at the tip of the corona element and at the streamer heads, specific energy contribution, temperature at the reactor inlet) the plasmacatalytic mechanism of the process takes place at very low temperatures.

The conversion process of EF into synthesis gas takes place in the plasmacatalytic reactor (3) (Fig. 1) which comprises the microwave resonator with the communication element and in which the reagents, preheated in the heater (14) (Fig. 2,3), are subjected to treatment in the active area (8) of the plasmacatalytic reactor by a pulse-periodic pseudocorona streamer microwave discharge.

The coefficient of communication of the resonator with the waveguide through the communication orifice (6) is chosen to provide a subdisruptive field in the resonator (for the given diameter D of the resonator) and the power of the radiation impulse.

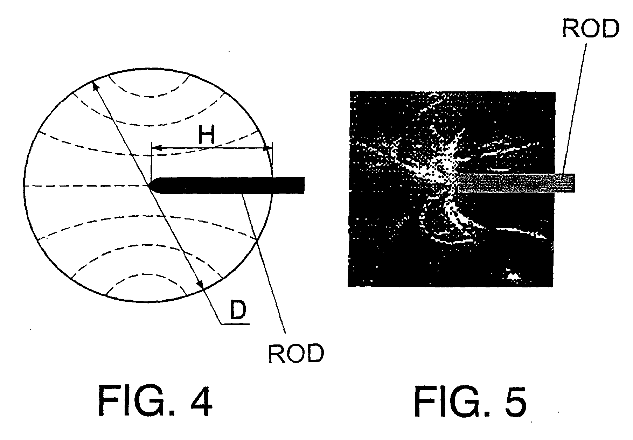

The pseudocorona streamer microwave discharge is initiated by the corona elements (Fig. 1), sharp metal rods. The rod tip increases the magnitude of the microwave electric field in its surroundings and thus brings about the pseudocorona discharge stage. The rod is aligned with the field force lines in the waveguide (Fig. 4).

The position of the tip of each rod (4) (Fig. 4) is chosen under the following conditions: a) obtaining a sufficiently high electric field at the rod tip (high enough to allow a branching microwave streamer propagating fast enough to reach the resonator wall in the impulse time) ; and b) creating the isotropic conditions for initiating discharge along the set of corona elements along the axis of the plasmacatalytic reactor.

The streamers of the pseudocorona discharge stage transform the microwave field into a system of plasma channels and propagate in the form of microwave streamers (Fig. 5), branching and filling the cross section of the reactor, and forming the pulse microwave discharge (8) (fig. 1). The function of the pseudocorona discharge stage is to generate plasma at atmospheric pressure with high average energy electrons. The function of the microwave streamer stage is to create the plasma formation extended throughout space for the plasmacatalytic treatment of the reagents.

Figure 5 shows the external characteristics of the streamer microwave discharge under which occurs the plasmacatalytic conversion process of liquid EF into synthesis gas. In this way a branched discharge structure was obtained with a sufficiently high microwave field intensity at the microwave streamer propagation head (above 100 kv/cm). Said structure, together with the high propagation velocity of the microwave streamer head, ensures the uniform conversion of the initial reagents in the plasmacatalytic conversion process of liquid hydrocarbon fuels in the impulse time of the microwave radiation.

The plasma conversion mode of EF into synthesis gas, for example for using the synthesis gas in transportation devices as a fuel for an internal combustion engine, and the device for execution thereof, is obtained as follows:

The preheated air is sent from the heater (14) to the combustion chamber (1). The burned part of the EF is sent to the nozzle (10) and the rest of the EF is sent to the nozzle (11) (Fig. 3) to perform the steam-air conversion process (fig. 3). The remaining EF is mixed with the steam.

In the construction of the combustion chamber (1) the nozzles (10) and 811) are connected to two concentric ultrasound nozzle systems. Using these nozzles in the device takes the reagent mixture to a molecular level in the order of $10^{-3}$ - $10^{-5}$ seconds. In the space between two nozzle systems part of the fuel is oxidised by oxygen in the air and the energy released in this oxidation process further heats the reagents. The heated and mixed reagents enter the inlet nozzle (2) of the plasmacatalytic reactor (3).

The microwave energy of the generator (12 through the inlet system (5) and the communication element (6) ) is introduced at a superhigh frequency in the resonator, which in turn is part of the plasmacatalytic reactor, in which the $H_{11}$ wavetype is excited and propagated along the axis of the resonator. The nozzle (2) for reagent inlet in the reactor includes a tube that narrows towards the combustion chamber, with a diameter d that is chosen so that it is the outer limit of the excited wave in the resonator ($H_{11}$ wavetype), that is, the microwave radiation is reflected at it. The products of the process leave the reactor through the outlet system (4), which is in the form of an end cap with orifices or of a nozzle that narrows along the motion of the gas. In addition to the outlet of process products the function of the cap or nozzle is to reflect the microwave radiation back to the resonator. In both cases the reactor is a resonator for the microwave radiation. The length of the reactor (L in Fig. 1) is chosen so that it is an integer multiple n of half wavelengths in the waveguide. In the longitudinal direction ($L_2$ in Fig. 1) the rod is located at the maximum of the standing wave in the resonator without discharge.

The microwave radiation source operates in the pulse-periodic (or semicontinuous) regime. The radiation pulse duration $t_1$ is determined from the time required to establish both discharge stages (pseudocorona and streamer) in the specific conditions. The radiation pulse repetition period $t_2$ is chosen from an optimal combination of the following values: a) lifetime of the active particles generated by the plasma in the passive discharge stage after the superhigh frequency radiation pulse stops; b) the linear velocity of the reagents as they pass through the discharge area; and c) the power supplied to the discharge:

$$J_{plasma} = W/1$$

Where $J_{plasma}$ is the plasma power contribution, W = Wpulse* $t_1/t_2$ = average power of the microwave radiation, Wpulse = pulse power; 1 = volumetric consumption of reagents.

The microwave radiation pulse power, Wpulse, determines the plasma energy supplied, Jplasma. The ratio of plasma energy supplied to heat energy supplied is small - Jplasma:Jheat on the order of 5-10%. In addition, the pulse power depends on the magnitude of the electric field in the round waveguide without plasma, which must have a predetermined value and at the same time be high enough to initiate the pseudocorona discharge stage at the corona element.

The plasmacatalytic conversion of EF into synthesis gas can operate in the steam-air conversion or air processes for conversion of EF into synthesis gas.

**Steam-air conversion regime of EF into synthesis gas (fig. 2) for given amounts of fuel (x) and oxygen (y)**

$$XCmHn + yO_2 + 3,73\ y\ n_2 + (mx-2y)\ H_2O = mxCO + 0.5\ (nx + 2m-$$

$$4y)H_2 + 3.73\ y\ N_2$$

Air is sent to the heater (14), engine fuel is sent to the inlets of the lateral nozzles (10) and (11) of the combustion chamber in ratios of 0.5 to 2. The steam mixed with the remaining part of the EF is sent to the inlet of nozzle (11). The EF and the water can be sent to the combustion chamber as vapour or as liquid. The temperature at the heater outlet is 500-600 K, and at the reactor inlet after mixing the steam-air mixture and the fuel it is 800-1500 K. The temperature at the end of the reaction is 500-800 K. The molar ratios of steam/air and steam/fuel vary between 0.06-2.5 and 1-6 respectively.

The transformation scale «a» of reagents into synthesis gas depends on the energy contribution Jsum to the system. As well as on the molar part of air "g" in relation to the amount of fuel. The main quantitative properties of the process are shown in the following table:

| G, % | Jsum, KJ/Kg | «a, %» |
|---|---|---|
| 25 | 7300 | 100 |
| 25 | 3400 | 65 |
| 42 | 4500 | 100 |
| 42 | 1500 | 64 |
| 64 | 1500 | 100 |
| 64 | 850 | 95 |

**Air conversion regime of EF into synthesis gas (fig. 2):**

$$CmH + m/2 (O_2 + 79/21N_2) = mCO + n/2H_2 + m/2* 79/21 N_2$$

Air is sent to the heater and the EF is sent to the inlets (10) and (11) of the combustion chamber, in a ratio of 0.5 to 2. The EF can be sent to the combustion chamber as a vapour or as a liquid. The molar ratio of air/engine fuels at the reactor inlet is 16-20. The air temperature required to carry out the EF conversion process at the heater outlet is between 700-1,200K, and the temperature at the reactor inlet after mixing the air with the fuel is 600-1,100 K. To ensure the working temperature of the process the energy contribution must be between 500-1,000 KJ/kg (without heat recovery). The reagent transformation scale reaches 100%. The temperature of the synthesis gas at the reactor outlet is between 1,300-1,900 K.

**Claims**

1.  Method for conversion of engine fuels (EF) into synthesis gas, wherein takes place the steam-air or air conversion reaction with hydrocarbons that may be used as EF, wherein the air is preheated, a part of the EF is burned in the combustion chamber and the rest is mixed with the combustion products and steam or is mixed only with the combustion products, **characterised in that** the reagents are sent to the plasmacatalytic reactor, to which is also sent a pulse (or semicontinuous) microwave discharge, with the pulse-periodic pseudocorona streamer microwave discharge initiated with given energy and temperature parameters, where the plasma formation acts as a catalyst in the reactor to accelerate the conversion process at atmospheric pressure.

2.  Method according to claim 1, **characterised in that** the plasmacatalytic conversion process is achieved by the pulse-periodic pseudocorona streamer microwave discharge (or semicontinuous discharge) at atmospheric pressure.

3.  Method according to claim 1, **characterised in that** in the plasmacatalytic reactor a subdisruptive intensity is attained of the pulse microwave electric field, with the streamer pseudocorona microwave discharge being initiated at the tips of the corona elements, and because of the above at these tips and at the heads of the microwave streamers a microwave a microwave electric field intensity is established greater than 100 kv/cm, formed by the microwave streamers, which in les than 1 microsecond propagate to the reactor wall while simultaneously branching out in space and filling the cross section of the plasmacatalytic chemical reactor.

4.  Method according to claims 1-3, **characterised in that** the pulse sequence of the microwave radiation is in the centimetre or decimetre band of superhigh frequency (X, S bands) with the following parameters: pulse duration 0.1-1 microseconds; passage efficiency of the discharge 100-1000; the pulse power level is determined by the condition that the intensity of the microwave electric field at the plasmacatalytic reactor and at the heads of the microwave streamers be above 100 kv/cm, and the consumption of the sum of reagents Q and the average value of the microwave power W is established under the condition that they correspond to a bracket of values of specific plasma energy contribution Q/W of 0.05-0.2 kvt*hour/nm$^3$, with the plasma energy contribution not exceeding 5-10% of the energy content of the reagents at the working temperature for the process.

**5.** Method according to claims 1-4, **characterised in that** in order to carry out the steam-air-EF plasmacatalytic conversion the temperature of the reagents at the plasmacatalytic reactor inlet are within 800-1,500K.

**6.** Method according to claims 1-5, **characterised in that** the ratio of the EF burned in the combustion chamber and the unburned EF ranges from 0.5 to 2.

**7.** Method according to claims 1-6 **characterised in that** the molar ratios $H_2O$/air $H_2O$/EF at the inlet of the plasma-catalytic reactor are within 0.06-2.5 and 1-6 respectively.

**8.** Method according to claims 1-4 **characterised in that** in order to carry out the air EF plasmacatalytic conversion process the temperature of the reagents at the inlet of the plasmacatalytic reactor must be within 600- 1100 K.

**9.** Method according to claims 1-4,8 **characterised in that** the ratio of the burned EF and the unburned EF ranges from 0.5 to 2.

**10.** Method according to claims 1-4, 8, 9 **characterised in that** the molar ratio air to EF at the inlet of the plasmacatalytic reactor is within 16-20.

**11.** Plasmacatalytic converter of EF into synthesis gas comprising an air heater, a combustion chamber, and a plasmatron connected to the source of microwave radiation, **characterised in that** the plasmatron has the form of a plasmacatalytic chemical reactor containing a cylindrical microwave resonator for the $H_{11}$, with the pulse-periodic pseudocorona streamer microwave discharge in the centimetre or decimetre wavelength (X, S bands) at atmospheric pressure, with pulse duration of 0.1-1 microsecond and a discharge passage efficiency of 100-10 and with the combustion chamber installed between the air hater and the plasmacatalytic reactor - resonator, along the gas flow line, and is provided with two separate nozzles for independent inlet of the burned part of EF and the unburned part in the mixture with steam at different areas of the combustion chamber.

**12.** Plasmacatalytic converter according to claim 11 **characterised in that** the system for introducing the microwave radiation from the generator to the microwave resonator is in the form of a rectangular waveguide through the side wall of the resonator.

**13.** Plasmacatalytic converter according to claim 11 **characterised in that** the system for introducing the microwave radiation from the generator to the microwave resonator is in the form of a rectangular waveguide along the axis of the resonator.

**14.** Plasmacatalytic converter according to claims 11-13 **characterised in that** between the rectangular waveguide and the cylindrical resonator is placed the excitation system in the resonator for the $H_{11}$ wavetype with the communication element for the resonator to the waveguide.

**15.** Plasmacatalytic converter according to claims 11, 12 **characterised in that** the reagent inlet nozzle is in turn one of the end reflectors of the microwave resonator and the outlet system for the process products is the second end reflector.

**16.** Plasmacatalytic converter according to claims 11, 13 **characterised in that** the reagent inlet nozzle or the outlet system for the process products is also one of the end reflectors of the microwave resonator, and the second end reflector is the excitation system of the $H_{11}$ wavetype in the cylindrical.

**17.** Plasmacatalytic converter according to claims 11, 12 **characterised in that** longitudinal axis of the rectangular waveguide is at a distance $L_1$ which is several half-wavelengths of the radiation in the cylindrical resonator and is selected with the condition that the $H_{11}$ wavetype is excited, while the resonator length L is an integer multiple of radiation half-wavelengths in the cylindrical waveguide with the wavetype $H_{11}$.

**18.** Plasmacatalytic catalyst according to claims 11, 14 **characterised in that** the connection coefficient of the resonator to the waveguide through the communication element is determined with the condition that it ensures a subdisruptive level of the microwave electric field intensity for the given diameter of the plasmacatalytic reactor-resonator.

19. Plasmacatalytic converter according to claims 11, 18 **characterised in that** the set of sharp metal rods that form the corona elements that initiate the discharge is installed in the areas L2 of maximum electric field intensity in the microwave resonator.

20. Plasmacatalytic converter according to claims 11, 19 **characterised in that** the position (14) of the tip of each rod in the radius of the cylindrical resonator is chosen with the condition that an electric field intensity be obtained at the tip of each rod and at the heads of the microwave streamers above 100 kv/cm.

21. Plasmacatalytic converter according to claim 11 **characterised in that** the combustion chamber is made in the form of two concentric supersonic nozzle systems installed successively along the gas flow line and independently connected to the reagent inlet nozzles.

22. Plasmacatalytic converter according to claim 11 **characterised in that** the heater is in the form of a recuperative thermoswitch.

**Amended claims in accordance with Rule 86(2) EPC.**

**1.** Method for conversion of motor fuels (MF) into synthetic gas, in which the vapour-air conversion reactions of the hydrocarbons that make up the composition of the motor fuel take place, using the microwave pulse discharge; wherin the air is preheated, a part of the motor fuel is burned in the combustion chamber and the rest is mixed with the combustion products and water vapour, or is mixed only with the combustion products; **characterised in that** the reagents are sent to the plasmacatalytic reactor, in which the streamer pseudo-corona microwave periodic-pulse discharge is initiated, with given time and energy parameters, in which the plasma formation acts as a catalyst accelerating the motor fuel conversion process.

**2.** Method according to claim 1, **characterised in that** the plasmacatalytic conversion process is achieved by the pulse-periodic pseudocorona streamer microwave discharge (or semicontinuous discharge) at atmospheric pressure.

**3.** Method according to claim 1, **characterised in that** in the plasmacatalytic reactor a subdisruptive intensity is attained of the pulse microwave electric field, with the streamer pseudocorona microwave discharge being initiated at the tips of the corona elements, and because of the above at these tips and at the heads of the microwave streamers a microwave a microwave electric field intensity is established greater than 100 kv/cm, formed by the microwave streamers, which in les than 1 microsecond propagate to the reactor wall while simultaneously branching out in space and filling the cross section of the plasmacatalytic chemical reactor.

**4.** Method according to claims 1-3, **characterised in that** the pulse sequence of the microwave radiation is in the centimetre or decimetre band of superhigh frequency (X, S bands) with the following parameters: pulse duration 0.1-1 microseconds; passage efficiency of the discharge 100-1000; the pulse power level is determined by the condition that the intensity of the microwave electric field at the plasmacatalytic reactor and at the heads of the microwave streamers be above 100 kv/cm, and the consumption of the sum of reagents Q and the average value of the microwave power W is established under the condition that they correspond to a bracket of values of specific plasma energy contribution Q/W of 0.05-0.2 kvt*hour/nm$^3$, with the plasma energy contribution not exceeding 5-10% of the energy content of the reagents at the working temperature for the process.

**5.** Method according to claims 1-4, **characterised in that** in order to carry out the steam-air-EF plasmacatalytic conversion the temperature of the reagents at the plasmacatalytic reactor inlet are within 800-1,500K.

**6.** Method according to claims 1-5, **characterised in that** the ratio of the EF burned in the combustion chamber and the unburned EF ranges from 0.5 to 2.

**7.** Method according to claims 1-6 **characterised in that** the molar ratios $H_2O$/air $H_2O$/EF at the inlet of the plasmacatalytic reactor are within 0.06-2.5 and 1-6 respectively.

**8.** Method according to claims 1-4 **characterised in that** in order to carry out the air EF plasmacatalytic conversion process the temperature of the reagents at the inlet of the plasmacatalytic reactor must be within 600- 1100 K.

**9.** Method according to claims 1-4,8 **characterised in that** the ratio of the burned EF and the unburned EF ranges from 0.5 to 2.

**10.** Method according to claims 1-4, 8, 9 **characterised in that** the molar ratio air to EF at the inlet of the plasma-catalytic reactor is within 16-20.

**11.** Plasmacatalytic converter of EF into synthesis gas comprising an air heater, a combustion chamber, and a plasmatron connected to the source of microwave radiation, **characterised in that** the plasmatron has the form of a plasmacatalytic chemical reactor containing a cylindrical microwave resonator for the $H_{11}$, with the pulse-periodic pseudocorona streamer microwave discharge in the centimetre or decimetre wavelength (X, S bands) at atmospheric pressure, with pulse duration of 0.1-1 microsecond and a discharge passage efficiency of 100-10 and with the combustion chamber installed between the air hater and the plasmacatalytic reactor - resonator, along the gas flow line, and is provided with two separate nozzles for independent inlet of the burned part of EF and the unburned part in the mixture with steam at different areas of the combustion chamber.

**12.** Plasmacatalytic converter according to claim 11 **characterised in that** the system for introducing the microwave radiation from the generator to the microwave resonator is in the form of a rectangular waveguide through the side wall of the resonator.

**13.** Plasmacatalytic converter according to claim 11 **characterised in that** the system for introducing the microwave radiation from the generator to the microwave resonator is in the form of a rectangular waveguide along the axis of the resonator.

**14.** Plasmacatalytic converter according to claims 11-13 **characterised in that** between the rectangular waveguide and the cylindrical resonator is placed the excitation system in the resonator for the $H_{11}$ wavetype with the communication element for the resonator to the waveguide.

**15.** Plasmacatalytic converter according to claims 11, 12 **characterised in that** the reagent inlet nozzle is in turn one of the end reflectors of the microwave resonator and the outlet system for the process products is the second end reflector.

**16.** Plasmacatalytic converter according to claims 11, 13 **characterised in that** the reagent inlet nozzle or the outlet system for the process products is also one of the end reflectors of the microwave resonator, and the second end reflector is the excitation system of the $H_{11}$ wavetype in the cylindrical.

**17.** Plasmacatalytic converter according to claims 11, 12 **characterised in that** longitudinal axis of the rectangular waveguide is at a distance $L_1$ which is several half-wavelengths of the radiation in the cylindrical resonator and is selected with the condition that the $H_{11}$ wavetype is excited, while the resonator length L is an integer multiple of radiation half-wavelengths in the cylindrical waveguide with the wavetype $H_{11}$.

**18.** Plasmacatalytic catalyst according to claims 11, 14 **characterised in that** the connection coefficient of the resonator to the waveguide through the communication element is determined with the condition that it ensures a subdisruptive level of the microwave electric field intensity for the given diameter of the plasmacatalytic reactor-resonator.

**19.** Plasmacatalytic converter according to claims 11, 18 **characterised in that** the set of sharp metal rods that form the corona elements that initiate the discharge is installed in the areas L2 of maximum electric field intensity in the microwave resonator.

**20.** Plasmacatalytic converter according to claims 11, 19 **characterised in that** the position (14) of the tip of each rod in the radius of the cylindrical resonator is chosen with the condition that an electric field intensity be obtained at the tip of each rod and at the heads of the microwave streamers above 100 kv/cm.

**21.** Plasmacatalytic converter according to claim 11 **characterised in that** the combustion chamber is made in the form of two concentric supersonic nozzle systems installed successively along the gas flow line and independently connected to the reagent inlet nozzles.

**22.** Plasmacatalytic converter according to claim 11 **characterised in that** the heater is in the form of a recuperative

thermoswitch.

EP 1 392 087 A1

FIG. 1

14   13  9      1

AIR → HEATER → COMBUSTION CHAMBER → PLASMATRON → SYNTHES-GAS

12

GENERATOR FSA

↓ 3

10   11

CM   CM,H₂O

# FIG. 2

12

GENERATOR FSA

14   13  9      1

AIR → HEATER → COMBUSTION CHAMBER → PLASMATRON → H₂- SYNTHES-GAS

↓ 3

10   11

CM   CM

# FIG. 3

FIG. 4

FIG. 5

<div align="center">**INTERNATIONAL SEARCH REPORT**</div>

| | |
|---|---|
| | International application No.<br>**PCT/ES01/00161** |

**A. CLASSIFICATION OF SUBJECT MATTER**

CIP[7]  H05H 1/30, B01J 19/12, C01B 3/36.
According to International Patent Classification (IPC) or to both national classification and IPC

**B. FIELDS SEARCHED**

Minimum documentation searched (classification system followed by classification symbols)

CIP[7]  H05H, B01J

Documentation searched other than minimum documentation to the extent that such documents are included in the fields searched

Electronic data base consulted during the international search (name of data base and, where practicable, search terms used)

EPODOC, WIPL, PAJ, CIBEPAT

**C. DOCUMENTS CONSIDERED TO BE RELEVANT**

| Category* | Citation of document, with indication, where appropriate, of the relevant passages | Relevant to claim No. |
|---|---|---|
| X | WO 01/09031 A1 (DAVID SYSTEMS TECHNOLOGY S.L.) 08.02.2001, **pages 47-58; claims; figures 8-17.** | 1-22 |
| X | WO 98/19965 A1 (MATERIALS MODIFICATION INC.) 14.05.1998, **the whole document.** | 1-22 |
| X | US 6190507 B1 (WHEALTON et al.) 20.02.2001, **the whole document.** | 1-22 |
| X | US 5015349 A (SUIB et al.) 14.05.1991, **the whole document.** | 1-22 |
| Y | WO 98/28223 A1 (H2-TECH S.A.R.L.) 02.07.1998, **the whole document.** | 1-22 |
| Y | EP 0438901 A1 (EXXON RESEARCH) 31.07.1991, **the whole document.** | 1-22 |
| Y | US 3577207 A (PAVLOVICH) 04.05.1971, **the whole document.** | 11-22 |
| Y | EP 0845287 A1 (AEA TECHNOLOGY PLC) 03.06.1998, **the whole document.** | 11-22 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 August 2001 (14.08.2001)** | **22 August 2001 (22.08.2001)** |

| Name and mailing address of the ISA/<br>**S.P.T.O.** | Authorized officer |
|---|---|
| Facsimile No. | Telephone No. |

Form PCT/ISA/210 (second sheet) (July 1992)

**EP 1 392 087 A1**

## INTERNATIONAL SEARCH REPORT
Information on patent family members

| | International Application No |
|---|---|
| | PCT/ES01/00161 |

| Patent document cited in search report | Publication date | Patent familiy member(s) | Publication date |
|---|---|---|---|
| WO 01/09031 A1 | 08.02.2001 | AU 2295100 A | 19.02.2001 |
| WO 98/19965 A1 | 14.05.1998 | EP 0946414 A | 06.10.1999 |
| | | JP 2001504753T | 10.04.2001 |
| US 6190507 B1 | 20.02.2001 | NONE | . |
| US 5015349 A | 14.05.1991 | NONE | . |
| WO 98/28223 A1 | 02.07.1998 | FR 2757499 A | 26.06.1998 |
| | | AU 5668798 A | 17.07.1998 |
| | | NO 993115 | 23.08.1999 |
| | | EP0952957 A | 03.11.1999 |
| | | CN 1245474 A | 23.02.2000 |
| | | BR 9714172 A | 29.02.2000 |
| | | US6245309 B | 12.06.2001 |
| EP 0438901 A1 | 31.07.1991 | US 4975164 A | 04.12.1990 |
| | | CA 2031957 A | 28.06.1991 |
| | | JP 3291242 A | 20.12.1991 |
| US 3577207 A | 04.05.1971 | DE 1924790 A | 19.11.1970 |
| | | GB 1226278 A | 24.03.1971 |
| | | FR 2050610 A | 02.04.1971 |
| EP0845287 A1 | 03.06.1998 | GB 2319941 AB | 03.06.1998 |
| | | JP 10156176 A | 16.06.1998 |
| | | GB 2324196 A | 14.10.1998 |
| | | US 6126779 A | 03.10.2000 |

Form PCT/ISA/210 (patent family annex) (July 1992)

15